# EUROPEAN PATENT APPLICATION

(11) **EP 4 597 468 A1**
(43) Date of publication of application: **06.08.2025**
(21) Application number: 22960904.5
(22) Date of filing: 29.09.2022
(51) Int. Cl.: G08G 1/00

(54) **INFORMATION PROCESSING DEVICE, DRIVING ASSISTANCE SYSTEM, AND INFORMATION PROCESSING METHOD**

(71) Applicant: Hitachi Astemo, Ltd., Ibaraki 312-8503 (JP)
(72) Inventor: JIRALERSPONG Trongmun, Tokyo 100-8280 (JP)
(74) Representative: MERH-IP Matias Erny Reichl Hoffmann Patentanwälte PartG mbB
(86) International application number: PCT/JP2022/036420
(87) International publication number: WO 2024/069844

(57) **Abstract**

Provided are an information processing device, a driving assistance system, and an information processing method capable of extracting driving experience information enabling automatic driving from driving data at a minimum cost or the like, distributing the driving experience information extracted in accordance with a traveling environment and a traveling condition of a vehicle, and providing driving assistance with high comfort and high availability. A server 1 distributes, to the vehicle, driving experience information of a cost that is minimum among costs of a plurality of driving behaviors calculated from driving data of a plurality of vehicles in a travel section and a traveling condition, thereby reducing cancellation of automatic driving.

## Description

### Technical Field

The present invention relates to, for example, an information processing device, a driving assistance system, and an information processing method for assisting automatic driving control of an automatic driving vehicle.

### Background Art

The market for automatic driving is becoming increasingly large, and in order to realize, for example, automatic driving travel of Level 3 or higher, it is necessary to improve the system.

PTL 1 discloses an automatic driving assistance device and a method for calculating a route (such as avoidance when it is difficult to turn right) adapted to each function of an automatic driving vehicle using a function achievement value (success/failure count) indicating a degree of achievement of each of a plurality of functions during automatic driving travel of the automatic driving vehicle.

PTL 2 discloses a travel assistance device and a method for setting assistance information to be used for travel assistance of a moving body according to a travel difficulty level of the moving body.

### Citation List

### Patent Literature

PTL 1: JP 2020-008411 A
PTL 2: WO 2021/229671 A

### Summary of Invention

### Technical Problem

By the way, in the automatic driving system that extracts the driving experience information from the driving data of the vehicle and distributes the extracted driving experience information to the vehicle as described above, in a case where the automatic driving vehicle is difficult to continue the automatic driving during traveling, it is necessary to request a driver to take over (the system returns driving to the driver). At that time, it is sufficient if the driver can immediately respond, but if the response is delayed, it may lead to an accident. In addition, in a complicated traveling environment, there is a possibility that a take-over request frequently occurs, which increases the load on the driver and leads to a decrease in system availability.

The present invention has been made in view of the above points, and an object of the present invention is to provide an information processing device, a driving assistance system, and an information processing method capable of extracting driving experience information enabling automatic driving from driving data at a minimum cost or the like, distributing the driving experience information extracted in accordance with a traveling environment and a traveling condition of a vehicle, and providing driving assistance with high comfort and high availability.

### Solution to Problem

An information processing device of the present invention that solves the above problem includes: a driving data acquisition unit that acquires driving data of a vehicle; a driving behavior extraction unit that extracts a driving behavior from the driving data; an execution time acquisition unit that acquires an execution time required for the driving behavior; a cost acquisition unit that acquires a cost of the driving behavior from a unit price corresponding to the driving behavior and the execution time; and a driving experience information storage unit that stores driving experience information in which the driving behavior is associated with the cost corresponding to the driving behavior, a section, and a traveling condition. The driving experience information storage unit stores the driving experience information on a basis of a plurality of costs acquired from driving data of a plurality of vehicles in the section and the traveling condition.

### Advantageous Effects of Invention

According to the present invention, in order to use an automatic driving function that is easily executed by an automatic driving vehicle as much as possible, for example, the server distributes driving experience information that enables traveling at a minimum cost or the like to the vehicle on the basis of past driving data, and the vehicle plans a traveling trajectory on the basis of the driving experience information and continues automatic driving. As a result, since the vehicle uses the automatic driving function that is easy to execute as much as possible, the number of times of cancellation of the automatic driving (= the number of times of take-over request to the driver) can be reduced. In addition, if the number of times of take-over requests to the driver is reduced, the load on the driver is reduced, and the availability of the system is also improved. At the same time, this also leads to reduction of traffic accidents due to delay in coping with take-over. In addition, the surplus calculation resource can be used in another task by the operation at the minimum cost.

Further features related to the present invention will become apparent from the description of the present specification and the accompanying drawings. In addition, problems, configurations, and effects other than those described above will be clarified by the following description of embodiments.

### Brief Description of Drawings

[FIG. 1] FIG. 1 is an overall view conceptually illustrating a driving assistance system according to a first embodiment.
[FIG. 2A] FIG. 2A is a block diagram for explaining an internal configuration of a server according to the first embodiment.
[FIG. 2B] FIG. 2B is a block diagram for explaining an internal configuration of a data calculation device of the server according to the first embodiment.
[FIG. 3] FIG. 3 is a diagram for explaining an example of event extraction in an event extraction unit according to the first embodiment.
[FIG. 4] FIG. 4 is a block diagram for explaining an internal configuration of a vehicle control device according to the first embodiment.
[FIG. 5] FIG. 5 is a block diagram for explaining an internal configuration of a cognitive determination device according to the first embodiment.
[FIG. 6A] FIG. 6A is a diagram illustrating an example of setting an automatic driving function and a unit price according to the first embodiment.
[FIG. 6B] FIG. 6B is a diagram for explaining unit price setting based on a difficulty level of driving operation assistance and a sensing function according to the first embodiment.
[FIG. 7] FIG. 7 is a diagram illustrating an extraction example of a driving behavior extraction unit including an automatic driving function according to the first embodiment.
[FIG. 8] FIG. 8 is a diagram illustrating a calculation example of a cost calculation unit including an execution time and a total cost of an automatic driving function according to the first embodiment.
[FIG. 9] FIG. 9 is a diagram for explaining a calculation example of a total cost by the cost calculation unit according to the first embodiment.
[FIG. 10] FIG. 10 is a diagram for explaining an example of driving experience information stored in a driving experience information database according to the first embodiment.
[FIG. 11] FIG. 11 is a flowchart for explaining data processing (at the time of analysis (at the time of generating driving experience information)) of the data calculation device of the server according to the first embodiment.
[FIG. 12A] FIG. 12A is a flowchart for explaining data processing (at the time of distribution/update of driving experience information) of the data calculation device of the server according to the first embodiment.
[FIG. 12B] FIG. 12B is a flowchart for explaining data processing (at the time of distribution/update of driving experience information) of a trajectory planning unit included in the cognitive determination device of the vehicle control device according to the first embodiment.
[FIG. 13] FIG. 13 is a diagram illustrating a setting example of an information source and a weight for grasping the surrounding environment according to a second embodiment.
[FIG. 14A] FIG. 14A is a diagram illustrating a setting example of weather and a correction amount according to a third embodiment.
[FIG. 14B] FIG. 14B is a diagram illustrating a setting example of an information source, weather, and a correction amount for grasping the surrounding environment according to the third embodiment.
[FIG. 15A] FIG. 15A is a diagram illustrating a setting example of a time zone and a correction amount according to the third embodiment.
[FIG. 15B] FIG. 15B is a diagram illustrating a setting example of an information source, a time zone, and a correction amount for grasping the surrounding environment according to the third embodiment.
[FIG. 16] FIG. 16 is a block diagram for explaining an internal configuration of a data calculation device of a server according to a fourth embodiment.
[FIG. 17] FIG. 17 is a diagram for explaining a setting condition example of a constraint condition according to the fourth embodiment.

### Description of Embodiments

Hereinafter, embodiments of the present invention will be described with reference to the drawings. Note that, in all the drawings for explaining the embodiments, portions having the same functions are denoted by the same reference numerals, and repeated description thereof may be omitted.

### [First Embodiment]

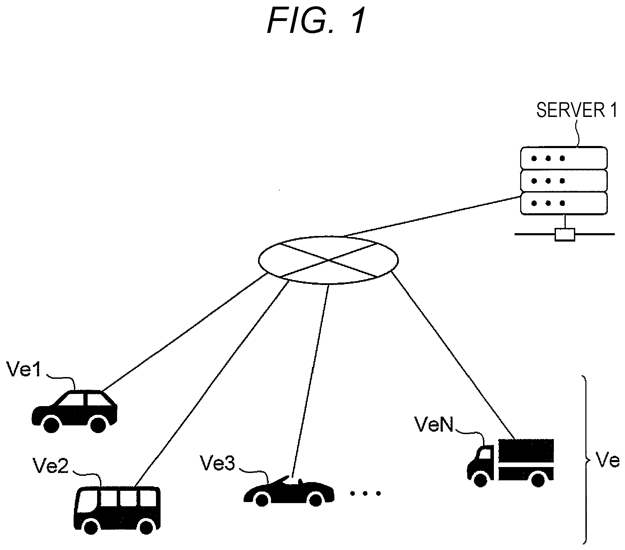

A first embodiment of the present invention will be described with reference to FIGS. 1 to 12B.

FIG. 1 is an overall view conceptually illustrating a driving assistance system according to a first embodiment.

The driving assistance system includes a server 1 and a plurality of vehicles Ve (Ve1, Ve2, Ve3, ... VeN) that are mobile objects. The server 1 and the vehicle Ve can exchange information by performing bidirectional communication by wireless communication. The server 1 extracts driving experience information from driving data sent from the vehicle Ve, and distributes the driving experience information extracted in accordance with the traveling environment and the traveling condition of the vehicle Ve to the vehicle Ve. The vehicle Ve performs trajectory planning (setting of a target trajectory and a target speed) using the driving experience information distributed from the server 1, and performs advanced driving assistance system (ADAS) and automatic driving (AD).

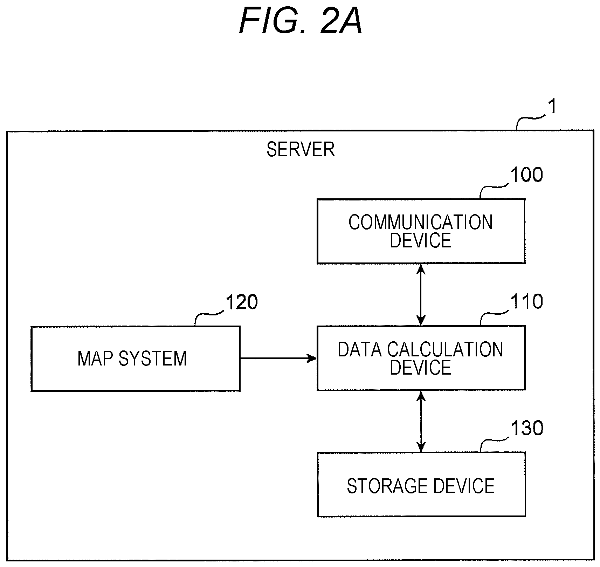

FIG. 2A is a block diagram for explaining an internal configuration of a server according to the first embodiment.

The server 1 that transmits and receives information to and from the vehicle Ve includes a communication device 100, a data calculation device 110, a map system 120, and a storage device 130.

The communication device 100 performs bidirectional communication of information with the vehicle Ve by wireless communication. The communication device 100 distributes driving experience information to the vehicle Ve and receives supply of feedback information including driving data which includes position information, route information, and the like from the vehicle Ve.

The data calculation device 110 acquires feedback information including driving data of the vehicle Ve from the communication device 100. Then, processing is performed in which a cost (to be described later) corresponding to the driving behavior of the driving data is acquired on the basis of the feedback information and stored as driving experience information together with the driving behavior, and the driving experience information (having the cost) extracted in accordance with the traveling environment and the traveling condition of the vehicle Ve is provided to the communication device 100.

The map system 120 is a system that manages map data on the server 1. Alternatively, the map data may be acquired on the server 1 from an external map system.

The storage device 130 stores data used for data processing of the data calculation device 110, data in the middle of data processing, data of a data processing result, and the like.

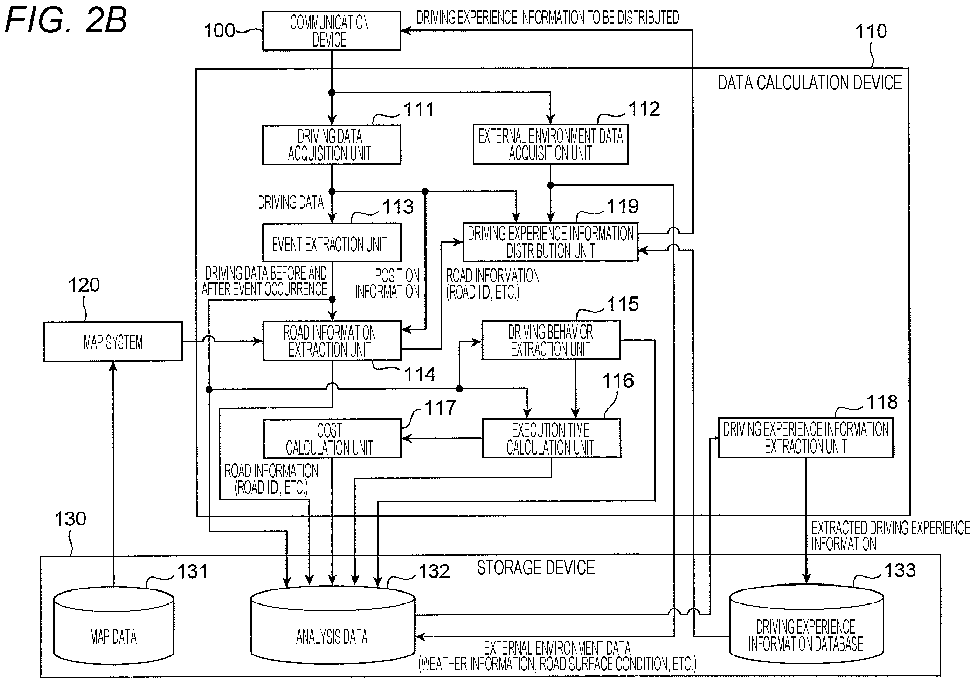

FIG. 2B is a block diagram for explaining an internal configuration of the data calculation device of the server according to the first embodiment.

The data calculation device 110 includes a driving data acquisition unit 111, an external environment data acquisition unit 112, an event extraction unit 113, a road information extraction unit 114, a driving behavior extraction unit 115, an execution time calculation unit 116, a cost calculation unit 117, a driving experience information extraction unit 118, and a driving experience information distribution unit 119.

The driving data acquisition unit 111 acquires driving data transmitted from the vehicle Ve via the communication device 100. The driving data includes speed information, acceleration/deceleration information, various types of internal sensor information (wiper ON/OFF, flag of direction indicator, etc.), external sensor information (such as camera image information) and recognition results thereof, various types of vehicle control information (such as an operation flag of each automatic driving function), route information (such as a car navigation system), position information, and the like.

The external environment data acquisition unit 112 acquires external environment data transmitted from the vehicle Ve via the communication device 100. The external environment data acquisition unit 112 acquires weather information and the like as the external environment data, but is not limited to the weather information. In addition to the weather information, road condition information including a road surface condition of a road and the like can also be acquired. In the present embodiment, the external environment data transmitted from the vehicle Ve is described (it may be either a case where the own vehicle recognizes itself or a case where the vehicle Ve acquires from an external provider), but the present invention is not limited thereto. External environment information may be acquired from an external service provider. The acquired data is stored in the storage device 130 (analysis data 132 thereof) in association with driving data before and after occurrence of an event to be described later.

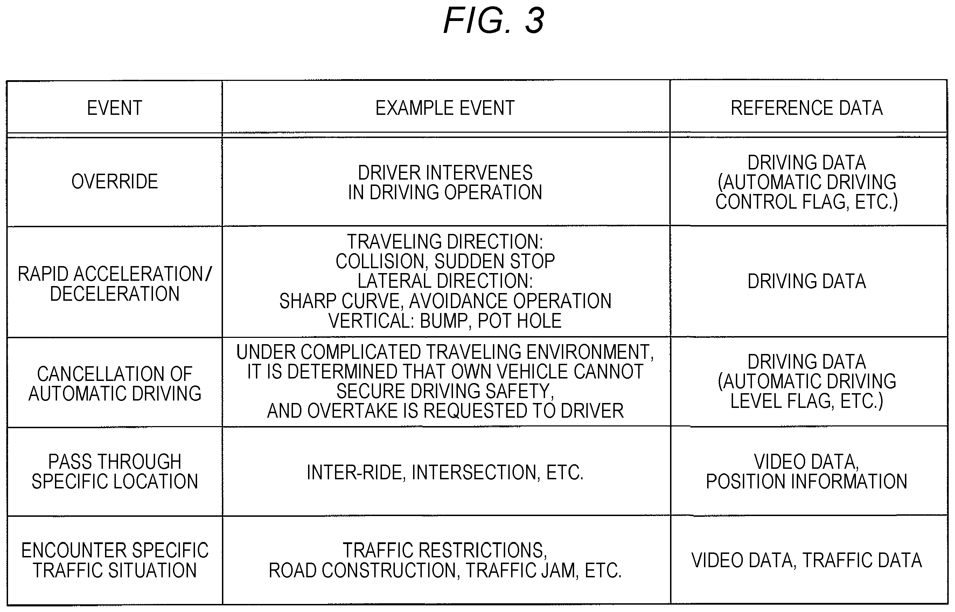

The event extraction unit 113 detects an event from the driving data based on a regulation rule, extracts driving data before and after occurrence of an event, and stores the extracted driving data in (the analysis data 132 of) the storage device 130. The state before and after the occurrence of an event includes a predetermined time before and after the occurrence of an event, a predetermined section before and after the occurrence of an event, a predetermined distance before and after the occurrence of an event, and the like. FIG. 3 is a diagram for explaining an example of event extraction in the event extraction unit 113 according to the first embodiment. Since it is difficult to analyze the driving data of all the itinerary, the driving data before and after the occurrence of an event is set as the analysis target.

The road information extraction unit 114 performs map matching on the basis of the position information (or time series data of the position information) and the map information, and acquires road information including a road ID or a road section on which the vehicle is traveling. The acquired data is stored in the storage device 130 (analysis data 132 thereof) in association with driving data before and after occurrence of an event. In the present embodiment, as an example of the map information, the high-precision map information having information in units of lanes is used, but the present invention is not limited thereto. In a case where the road-basis map information such as the car navigation map is used, the lane information can be added to the map information based on the attribute information and the standard of the road. Here, the map information is acquired from map data 131 of the storage device 130 on the server 1 via the map system 120, but map data (map provider or the like) acquired from an external system may be used in addition to the map data 131 stored in the storage device 130 of the server 1.

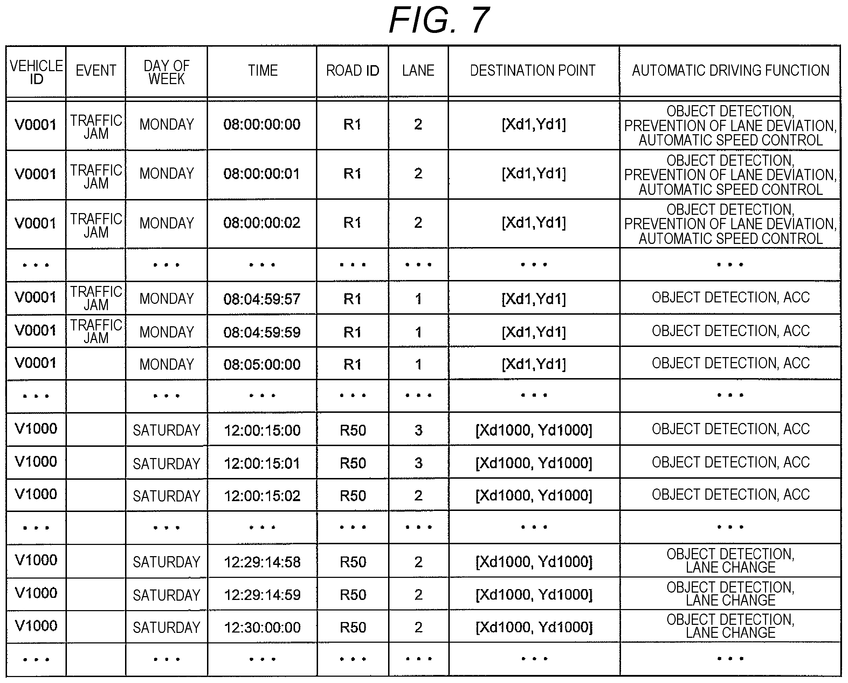

The driving behavior extraction unit 115 extracts the driving behavior (see FIG. 7) including the automatic driving function and the like from the driving data before and after the occurrence of an event, and stores the extracted driving behavior in (analysis data 132 of) the storage device 130.

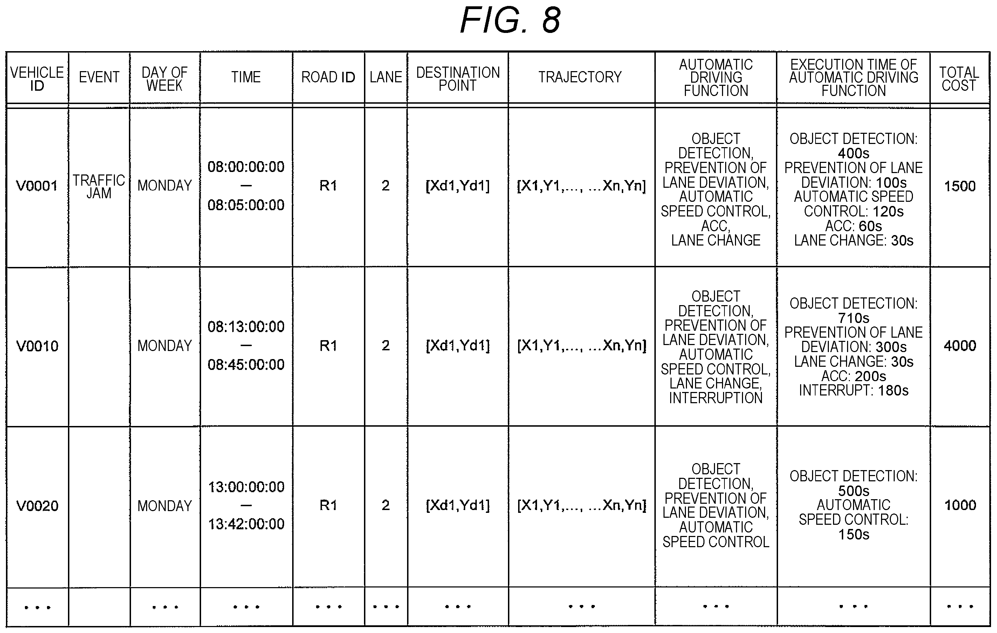

The execution time calculation unit 116 calculates an execution time (see FIG. 8) required to execute the driving behavior extracted by driving behavior extraction unit 115, and stores the execution time in (analysis data 132 of) the storage device 130.

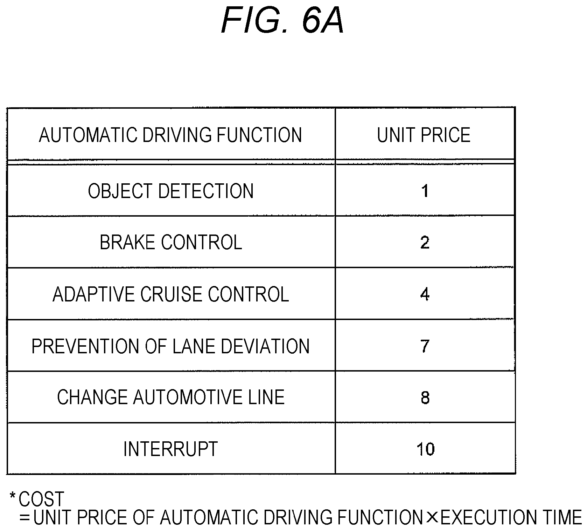

The cost calculation unit 117 calculates a cost (see FIG. 8) corresponding to the driving behavior from the unit price (see FIG. 6A) corresponding to the driving behavior extracted by the driving behavior extraction unit 115 and the execution time acquired by the execution time calculation unit 116, and stores the cost in (analysis data 132 of) the storage device 130.

From the analysis data 132, the driving experience information extraction unit 118 performs statistical processing on the basis of the driving data after event extraction and the corresponding road information and the external environment data, and extracts the driving experience information such as a dynamic state of a vehicle in a normal state and a method of passing through the same road ID more quickly. That is, in the present embodiment, the driving experience information extraction unit 118 extracts the driving experience information in which the driving behavior extracted from the driving data after event extraction is associated with the cost corresponding to the driving behavior, the section (road ID or road section) in the traveling route of the vehicle, and the traveling condition. Here, the driving experience information extraction unit 118 extracts driving experience information of a minimum cost or driving experience information of a most frequent cost on the basis of a plurality of costs acquired from a plurality of driving data in a section (road ID or road section) and a traveling condition in a traveling route of the vehicle. The extracted driving experience information is stored in a driving experience information database 133 of the storage device 130. As a result, the driving experience information for determining the driving behavior of the vehicle is generated and stored.

The driving experience information distribution unit 119 searches for the corresponding driving experience information from the driving experience information registered in the driving experience information database 133 on the basis of the road information (road ID or the like) during traveling specified by the road information extraction unit 114, the route information transmitted from the vehicle Ve, the external environment information (weather information or the like), and the date and time information, extracts the driving experience information, and distributes the extracted driving experience information to the vehicle Ve via the communication device 100. Note that the driving experience information to be specified is not limited to, for example, only driving experience information corresponding to the road ID on which the own vehicle is currently traveling, and driving experience information or the like of a road ID to be passed next can be specified and distributed on the basis of the route information. How many pieces of driving experience information of the road ID ahead are to be distributed to the vehicle Ve may be arbitrarily determined in advance. Further, in a case where the external environment information cannot be acquired, the corresponding driving experience information is specified based on the remaining information. Although the route information is used in the present embodiment, the present invention is not limited thereto. For example, the current position information of the vehicle Ve may be used, or the position information of the place to which the user wants to go may be used. Furthermore, it is also conceivable to transmit driving data from the vehicle Ve to a server, and the server searches for route information and position information from the data.

As a result, the driving experience information extracted in accordance with the traveling environment and the traveling condition of the vehicle Ve can be distributed to the vehicle Ve.

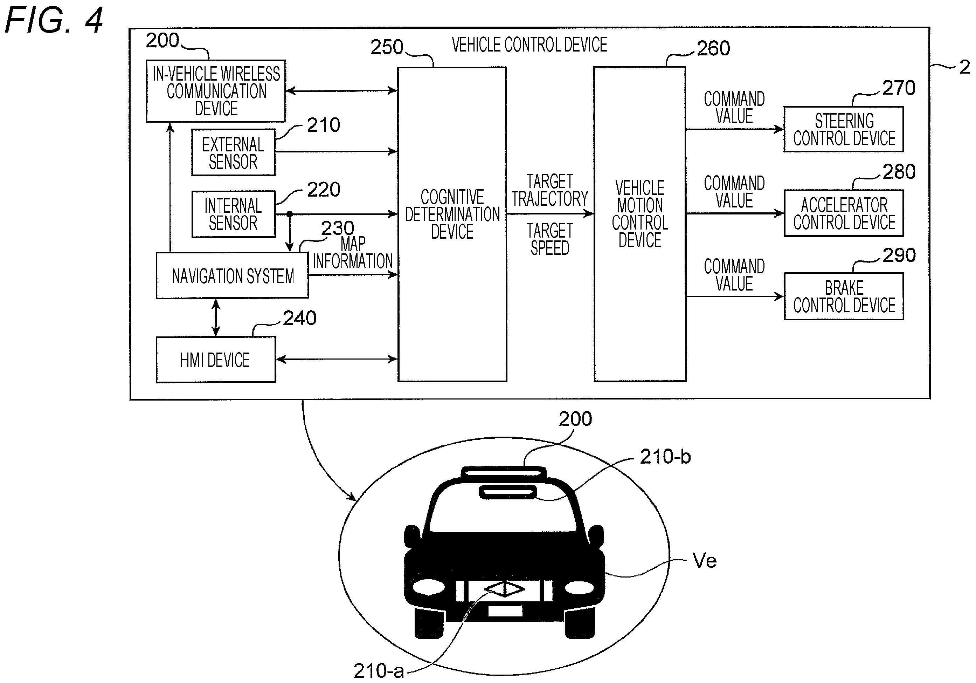

FIG. 4 is a block diagram for explaining an internal configuration of the vehicle control device according to the first embodiment.

The vehicle control device 2 is mounted on the vehicle Ve. The vehicle control device 2 includes an in-vehicle wireless communication device 200, an external sensor 210, an internal sensor 220, a navigation system 230, an HMI device 240, a cognitive determination device 250, a vehicle motion control device 260, a steering control device 270, an accelerator control device 280, and a brake control device 290.

The in-vehicle wireless communication device 200 is a communication device for performing wireless communication with the server 1 or with another vehicle, and performs processing of acquiring driving experience information from the server 1 and providing the driving experience information to the cognitive determination device 250, and transmitting driving data and external environment information acquired from the cognitive determination device 250 to the server 1.

The external sensor 210 is an environment recognition sensor for recognizing the surrounding environment of the vehicle Ve, and includes a stereo camera 210-b and a LiDAR 210-a. In addition to the above, the environment recognition sensor may be a combination of a monocular camera and a laser radar, or may use an ultrasonic sensor. In the present embodiment, the stereo camera 210-b is included.

The internal sensor 220 is a sensor for detecting an operation state of the vehicle Ve, and includes at least one sensor such as an acceleration sensor, a vehicle speed sensor, an engine rotation sensor, and a throttle valve opening sensor.

The navigation system 230 is a system for showing a route to a destination on a map based on map information and own vehicle position information and guiding the vehicle Ve to the destination.

The HMI device 240 is a device operated by an occupant of the vehicle Ve, and is operated, for example, when a destination is input to the navigation system 230.

The cognitive determination device 250 performs processing of recognizing the surrounding environment around the own vehicle using driving experience information and the like. The cognitive determination device 250 transmits information on the target trajectory and the target speed to the vehicle motion control device 260 on the basis of the result of the recognition processing.

The vehicle motion control device 260 outputs respective command values for controlling steering, accelerator opening, and braking of the vehicle Ve to the steering control device 270, the accelerator control device 280, and the brake control device 290. The steering control device 270, the accelerator control device 280, and the brake control device 290 control the steering, the accelerator opening, and the braking of the vehicle Ve based on the command value from the vehicle motion control device 260.

The cognitive determination device 250, the vehicle motion control device 260, the steering control device 270, the accelerator control device 280, and the brake control device 290 are configured by an electronic control device (hereinafter referred to as ECU) having a microcomputer. The ECU may be dedicated to each device, or two or more devices may be integrated into one ECU.

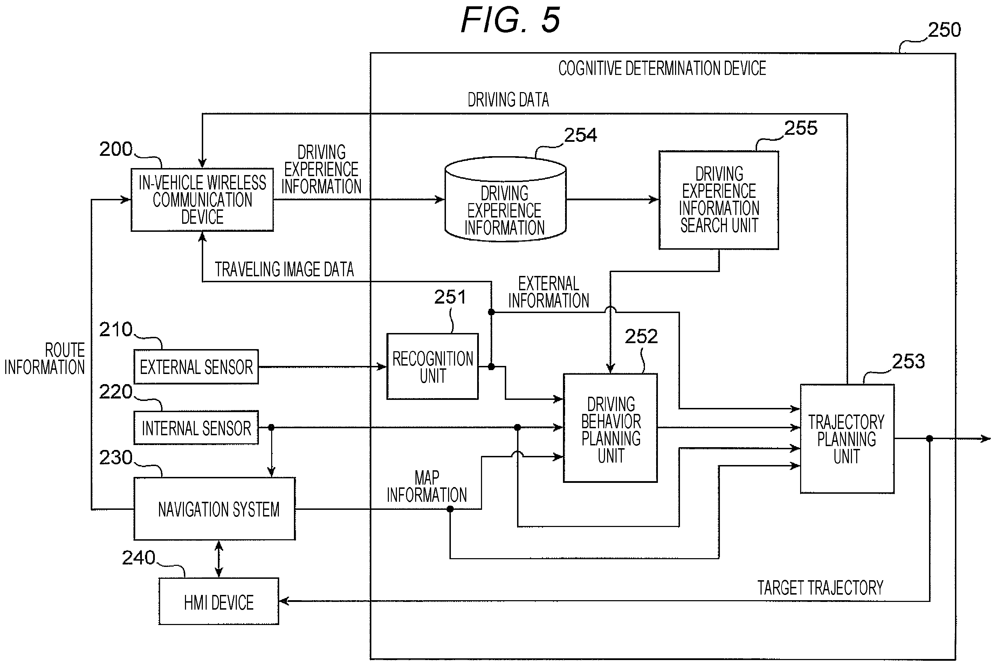

FIG. 5 is a block diagram for explaining an internal configuration of the cognitive determination device according to the first embodiment.

The cognitive determination device 250 includes a recognition unit 251, a driving behavior planning unit 252, a trajectory planning unit 253, and a driving experience information search unit 255.

The recognition unit 251 acquires environment data of the surrounding environment of the vehicle Ve from the external sensor 210. The recognition unit 251 performs processing of recognizing a target object around the own vehicle using detection information detected by the external sensor 210.

The driving experience information search unit 255 acquires driving experience information 254 transmitted from the server 1 via the in-vehicle wireless communication device 200. The driving experience information search unit 255 searches for and specifies appropriate driving experience information from the acquired driving experience information 254 (also referred to as driving experience information candidates) on the basis of the current traveling environment and traveling conditions.

The driving behavior planning unit 252 performs processing of planning the driving behavior of the vehicle Ve on the basis of the recognition result of the recognition unit 251, the detection result of the internal sensor 220, the map information from the navigation system 230, and the search result of the driving experience information search unit 255. The driving behavior planning unit 252 determines whether to adopt the driving experience information specified by the driving experience information search unit 255 on the basis of the recognition result of the recognition unit 251, the detection result of the internal sensor 220, and the map information from the navigation system 230, and plans the driving behavior of the vehicle Ve.

The trajectory planning unit 253 plans the trajectory (target trajectory and target speed) of the vehicle Ve on the basis of the external information, the driving behavior plan, the detection result by the internal sensor 220, and the map information from the navigation system 230. In a case where it is determined to adopt the driving experience information specified by the driving experience information search unit 255, the trajectory planning unit 253 plans the trajectory of the vehicle Ve on the basis of the external information, the driving behavior plan, the detection result by the internal sensor 220, the map information from the navigation system 230, and the driving experience information. On the other hand, in a case where it is determined not to adopt the driving experience information specified by the driving experience information search unit 255, the trajectory planning unit 253 plans the trajectory of the vehicle Ve on the basis of the external information, the driving behavior plan, the detection result by the internal sensor 220, and the map information from the navigation system 230 (without using the specified driving experience information). In addition, the trajectory planning unit 253 transmits the driving data to the server 1 via the in-vehicle wireless communication device 200.

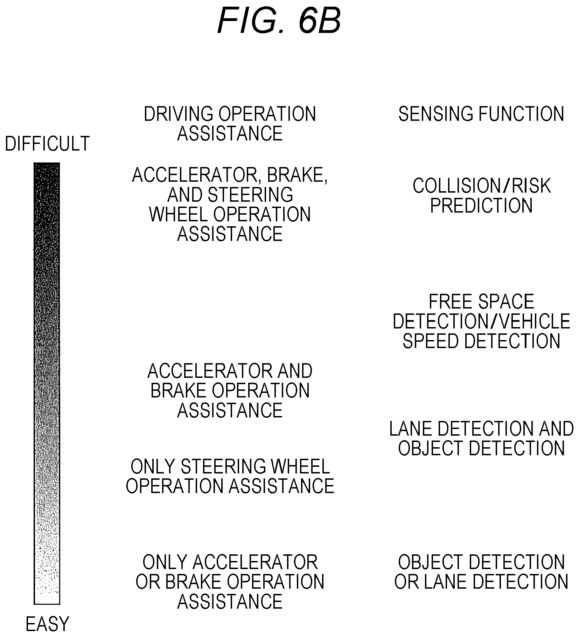

FIG. 6A is a diagram illustrating an example of setting an automatic driving function and a unit price according to the first embodiment. FIG. 6B is a diagram for explaining unit price setting based on the difficulty level of the driving operation assistance and the sensing function in the first embodiment.

As illustrated in FIGS. 6A and 6B, the unit price of the automatic driving function (driving behavior) is set in advance according to the driving operation assistance of the automatic driving function and the difficulty level of the sensing function.

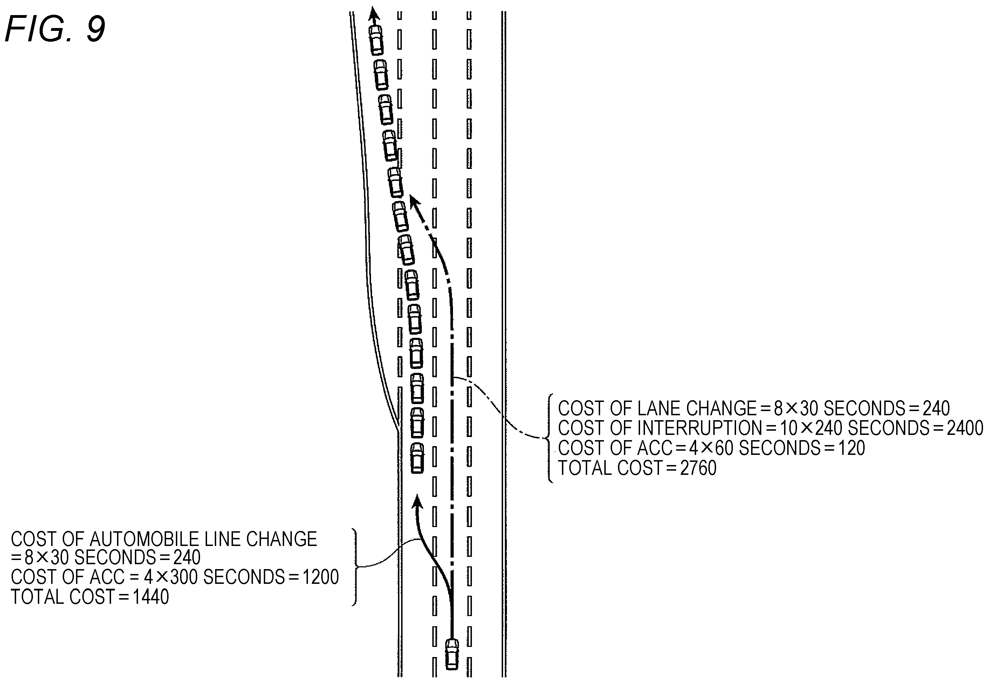

FIG. 7 is a diagram illustrating an extraction example of a driving behavior extraction unit including an automatic driving function according to the first embodiment. FIG. 8 is a diagram illustrating a calculation example of a cost calculation unit including an execution time and a total cost of an automatic driving function according to the first embodiment. FIG. 9 is a diagram for explaining a calculation example of a total cost by the cost calculation unit according to the first embodiment.

As illustrated in FIG. 7, the driving behavior extraction unit 115 extracts information including the automatic driving function (driving behavior). As illustrated in FIG. 8, the cost calculation unit 117 specifies information including a total cost calculated using the execution time of the automatic driving function in addition to FIG. 7.

As illustrated in FIG. 9, the cost calculation unit 117 calculates a cost (= unit price of automatic driving function × execution time) for each element constituting the automatic driving function (driving behavior) for each extracted event, and calculates a total cost of the automatic driving function (driving behavior) by summing the calculated costs for the elements. As described above, the driving experience information extraction unit 118 extracts the driving experience information of the minimum or most frequent cost on the basis of the plurality of costs (total cost) acquired from the plurality of driving data in the section (road ID or road section) in the traveling route of the vehicle and the traveling condition, and stores (saves) the extracted driving experience information in the driving experience information database 133 of the storage device 130.

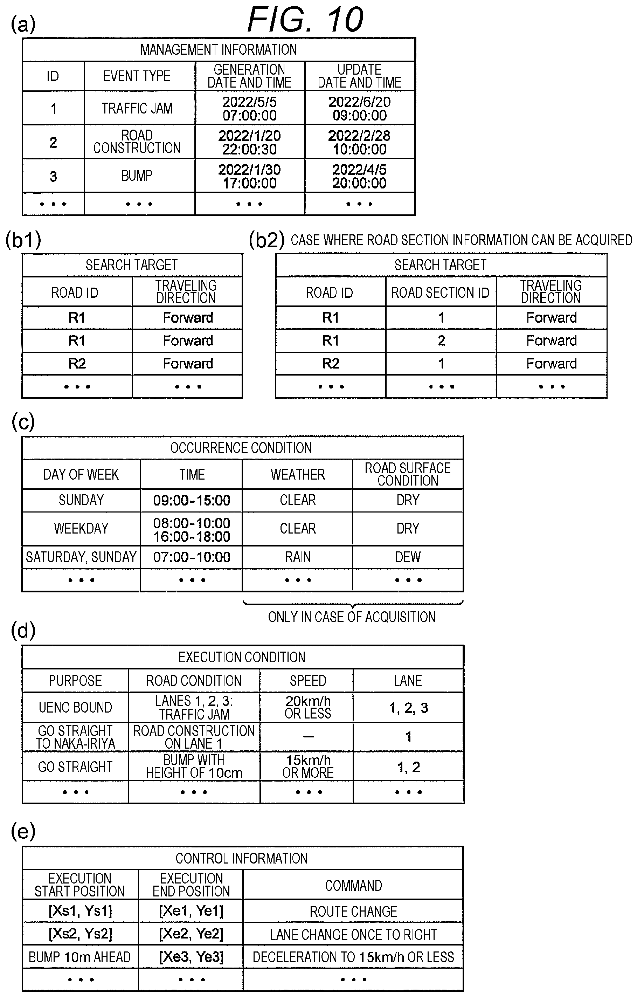

FIG. 10 is a diagram for explaining an example of driving experience information stored in a driving experience information database according to the first embodiment.

As illustrated in FIG. 10, the driving experience information stored in the driving experience information database 133 includes "management information" in (a), "search target" in (b1) ((b2) in a case where the road section information can be acquired), "occurrence condition" in (c), "execution condition" in (d), "control information" in (e), and the like. Note that the "search target" in (b1) (or (b2)) and the "day of week" and the "time" in the "occurrence condition" in (c) are information used by the server 1 at the time of search, and the "weather" and the "road surface condition" in the "occurrence condition" in (c) and the "execution condition" in (d) are information used by the vehicle Ve at the time of search.

When narrowing down the driving experience information distributed from the driving experience information database 133 to the vehicle Ve, the driving experience information distribution unit 119 specifies the corresponding driving experience information on the basis of the road information (road ID or the like) and the external environment information. For example, the driving experience information distribution unit 119 searches for corresponding driving experience information regarding the day information and time information of the "search target" in (b1) (or (b2)) and the "occurrence condition" in (c) on the basis of the road information. In this case, the driving experience information distribution unit 119 distributes the information of the "ID" of the "management information" of (a), the "occurrence condition" of (c), the "execution condition" of (d), and the "control information" of (e) to the vehicle Ve, and checks the information of (c) and (d) on the vehicle side. Note that the entire confirmation of the information of (c) may be performed on the server side and then distributed to the vehicle Ve. Next, the driving experience information distribution unit 119 distributes the corresponding item to the vehicle Ve. At this time, only the "ID" of the "management information" in (a), the "execution condition" in (d), and the "control information" in (e) are distributed as the information to be distributed in order to reduce the transfer amount. However, all the pieces of information (a) to (e) may be distributed to the vehicle Ve.

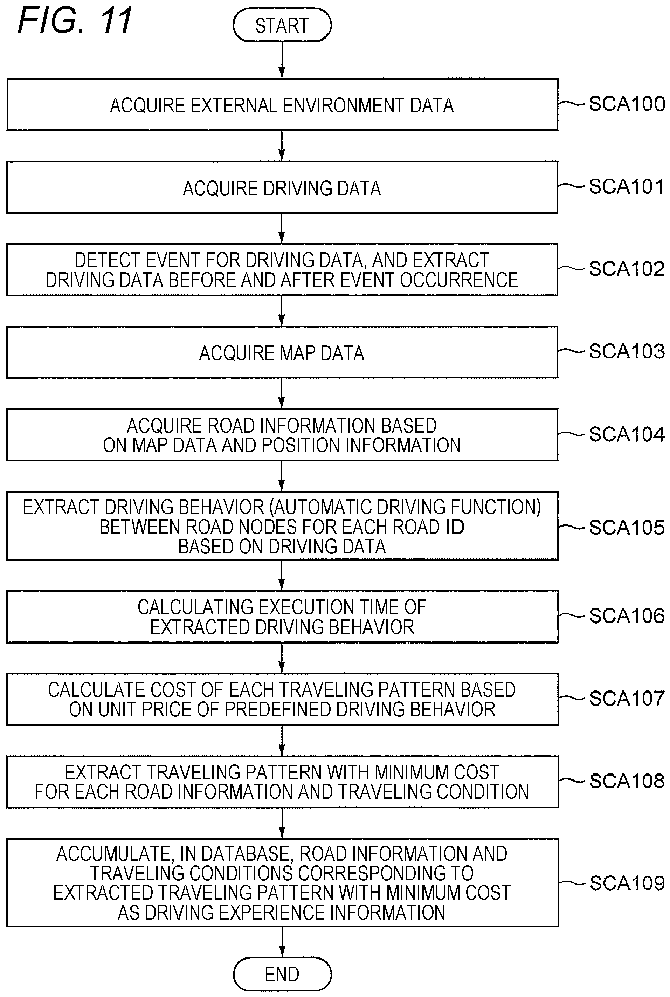

FIG. 11 is a flowchart for explaining data processing (at the time of analysis (at the time of generating driving experience information)) of the data calculation device of the server according to the first embodiment.

In the data calculation device 110 of the server 1, the external environment data acquisition unit 112 acquires the external environment data transmitted from the vehicle Ve (SCA100). The driving data acquisition unit 111 acquires driving data transmitted from the vehicle Ve (SCA101).

Then, the event extraction unit 113 detects an event with respect to the driving data and extracts driving data before and after occurrence of an event (SCA102).

In addition, the road information extraction unit 114 acquires map data from the map system 120 (SCA103), and acquires road information on the basis of the map data and the position information (or time-series data of the position information) (SCA104).

Then, the driving behavior extraction unit 115 extracts driving behavior (automatic driving function) between road nodes for road information (for example, for each road ID) based on the driving data (SCA105).

The execution time calculation unit 116 calculates an execution time of the extracted driving behavior (SCA106).

The cost calculation unit 117 calculates the cost (total cost) of each traveling pattern based on the unit price of the driving behavior defined in advance (SCA107).

Then, the driving experience information extraction unit 118 extracts a traveling pattern of a cost that is minimum or most frequent (minimum in the present embodiment) for each road information and traveling condition (SCA108), and accumulates (stores) the extracted traveling pattern of the cost that is minimum or most frequent (minimum in the present embodiment) and the corresponding road information and traveling condition as driving experience information in the driving experience information database 133 of the storage device 130 (SCA109).

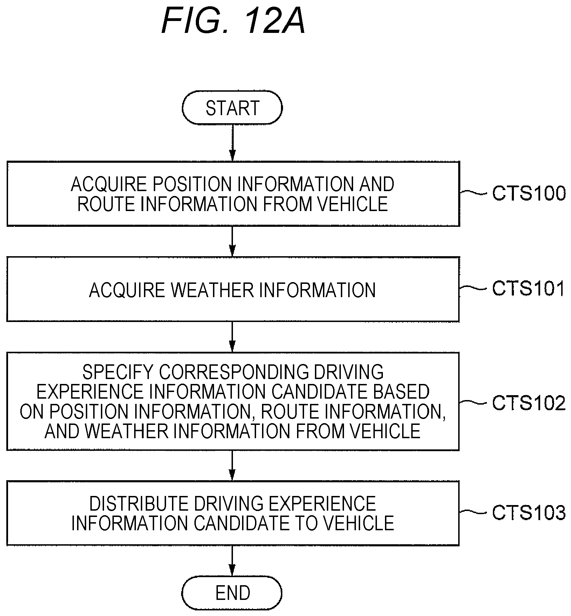

FIG. 12A is a flowchart for explaining data processing (at the time of distribution/update of driving experience information) of the data calculation device of the server in the first embodiment.

In the data calculation device 110 of the server 1, the driving data acquisition unit 111 acquires driving data (position information, route information, and the like) transmitted from the vehicle Ve (CTS100), and the external environment data acquisition unit 112 acquires external environment data (weather information and the like) transmitted from the vehicle Ve (CTS101).

Then, the driving experience information distribution unit 119 specifies corresponding driving experience information (also referred to as a driving experience information candidate) on the basis of the driving data (position information, route information, and the like) and the external environment data (weather information and the like) transmitted from the vehicle Ve (CTS102), and distributes the specified driving experience information (driving experience information candidate) to the vehicle Ve (CTS103).

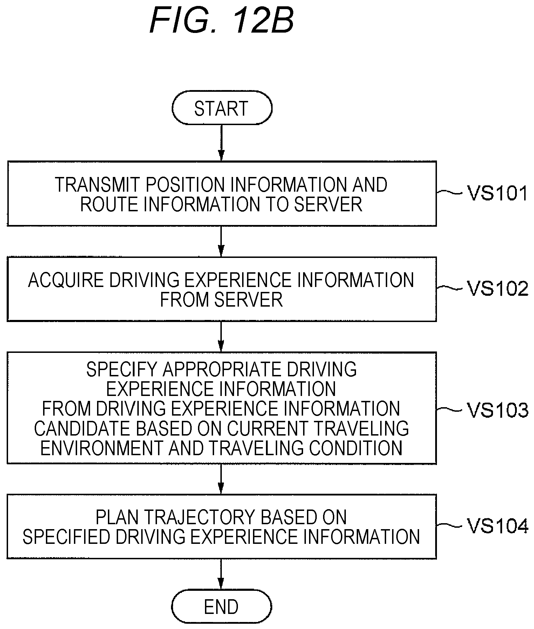

FIG. 12B is a flowchart for explaining data processing (at the time of distribution/update of driving experience information) of a trajectory planning unit included in the cognitive determination device of the vehicle control device according to the first embodiment.

The cognitive determination device 250 transmits driving data (position information, route information, and the like) to the server 1 (VS101). Further, the driving experience information transmitted from the server 1 is acquired (VS102).

In addition, the driving experience information search unit 255 specifies appropriate driving experience information from the acquired driving experience information (also referred to as driving experience information candidates) on the basis of the current traveling environment and traveling conditions (VS103). For example, a plurality of pieces of driving experience information having different traveling conditions (for example, traveling lanes) in a section in the traveling route of the vehicle is distributed to the vehicle Ve, and the vehicle Ve selects driving experience information to be executed according to the external information of the vehicle from the plurality of pieces of driving experience information (when traveling in the section).

Then, the driving behavior planning unit 252 and the trajectory planning unit 253 plan the trajectory (target trajectory and target speed) of the vehicle Ve on the basis of the specified driving experience information (VS104).

In the driving assistance system of the present embodiment described above, the vehicle Ve transmits driving data to the server 1. Then, the server 1 acquires the cost corresponding to the driving behavior of the driving data on the basis of the driving data sent from the vehicle Ve, and stores the acquired cost as driving experience information together with the driving behavior. Then, the server 1 extracts driving experience information from the driving data sent from the vehicle Ve, and distributes the driving experience information extracted in accordance with the traveling environment and the traveling condition of the vehicle Ve to the vehicle Ve. The vehicle Ve performs trajectory planning (setting of a target trajectory and a target speed) using the driving experience information distributed from the server 1, and performs advanced driving assistance system (ADAS) and automatic driving (AD).

According to the present embodiment, in order to use an automatic driving function that is easily executed by an automatic driving vehicle as much as possible, for example, the server distributes driving experience information that enables traveling at a minimum cost or the like to the vehicle on the basis of past driving data, and the vehicle plans a traveling trajectory on the basis of the driving experience information and continues automatic driving. As a result, since the vehicle uses the automatic driving function that is easy to execute as much as possible, the number of times of cancellation of the automatic driving (= the number of times of take-over request to the driver) can be reduced. In addition, if the number of times of take-over requests to the driver is reduced, the load on the driver is reduced, and the availability of the system is also improved. At the same time, this also leads to reduction of traffic accidents due to delay in coping with take-over. In addition, the surplus calculation resource can be used in another task by the operation at the minimum cost.

### [Second Embodiment]

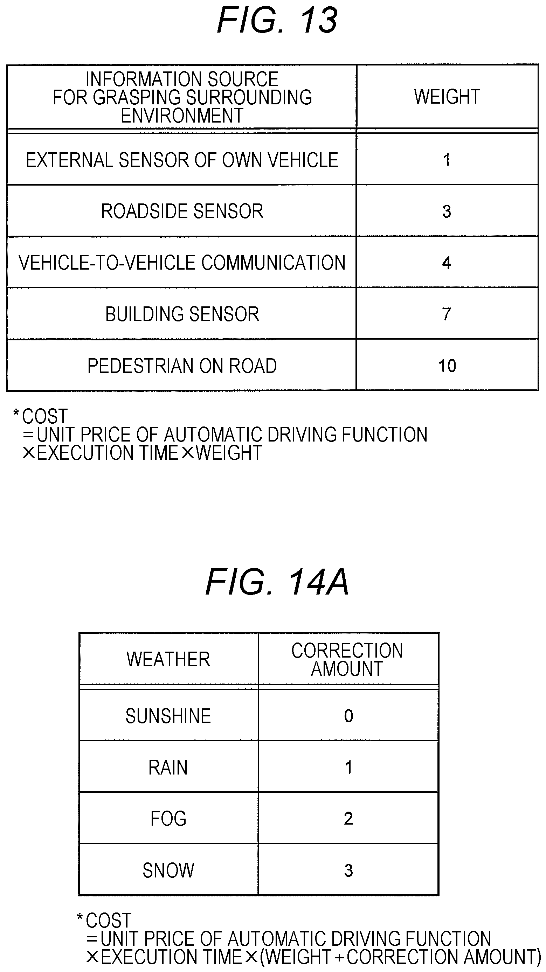

Next, a second embodiment of the present invention will be described with reference to FIG. 13.

A characteristic feature in the present embodiment is that driving experience information is generated in consideration of a weight (also referred to as a negotiation cost) based on the surrounding environment.

FIG. 13 is a diagram illustrating a setting example of an information source and a weight for grasping the surrounding environment according to the second embodiment.

As illustrated in FIG. 13, a weight is set in advance according to a difficulty level of negotiation with an information source for grasping the surrounding environment. In this case, the cost of the automatic driving function (driving behavior) is calculated by unit price of the automatic driving function × execution time × weight.

According to the present embodiment, the cost calculation unit 117 can acquire the cost including the weight based on the surrounding environment, generate the driving experience information, and distribute the driving experience information to the vehicle. As a result, since the vehicle uses the automatic driving function that is easy to execute as much as possible, the number of times of cancellation of the automatic driving (= the number of times of take-over request to the driver) can be reduced. In addition, if the number of times of take-over requests to the driver is reduced, the load on the driver is reduced, and the availability of the system is also improved. At the same time, this also leads to reduction of traffic accidents due to delay in coping with take-over. In addition, the surplus calculation resource can be used in another task by the operation at the minimum cost.

### [Third Embodiment]

Next, a third embodiment of the present invention will be described with reference to FIGS. 14A to 15B.

A characteristic feature in the present embodiment is that driving experience information is generated in consideration of weather and a time zone.

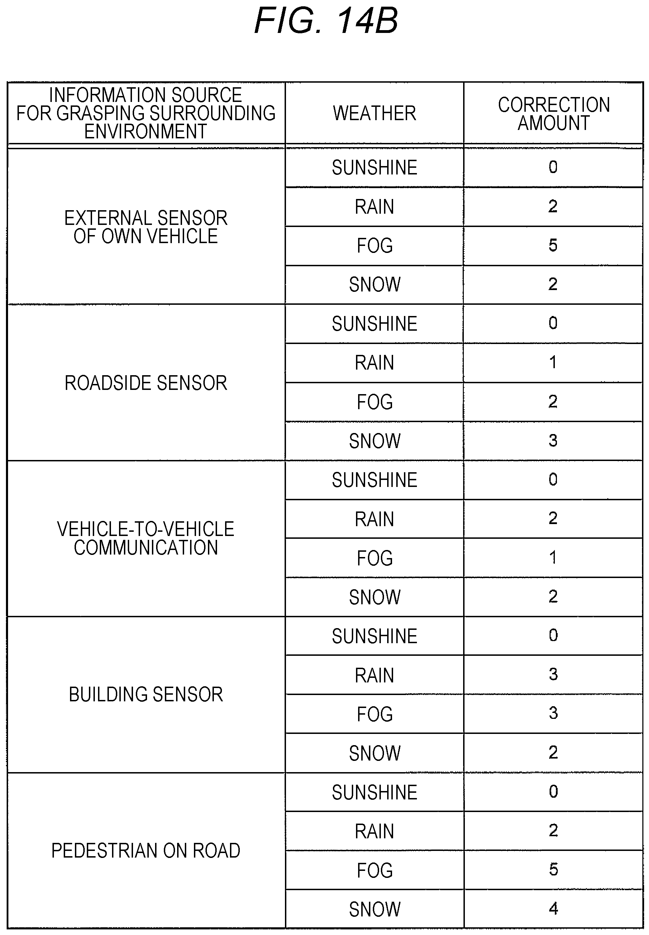

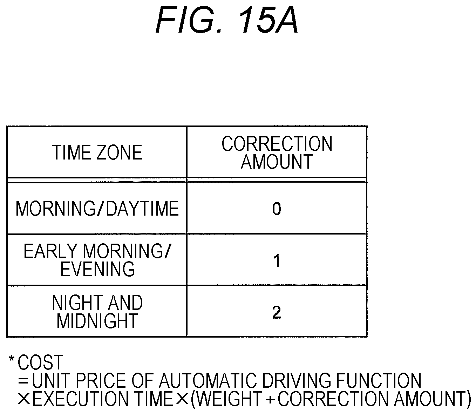

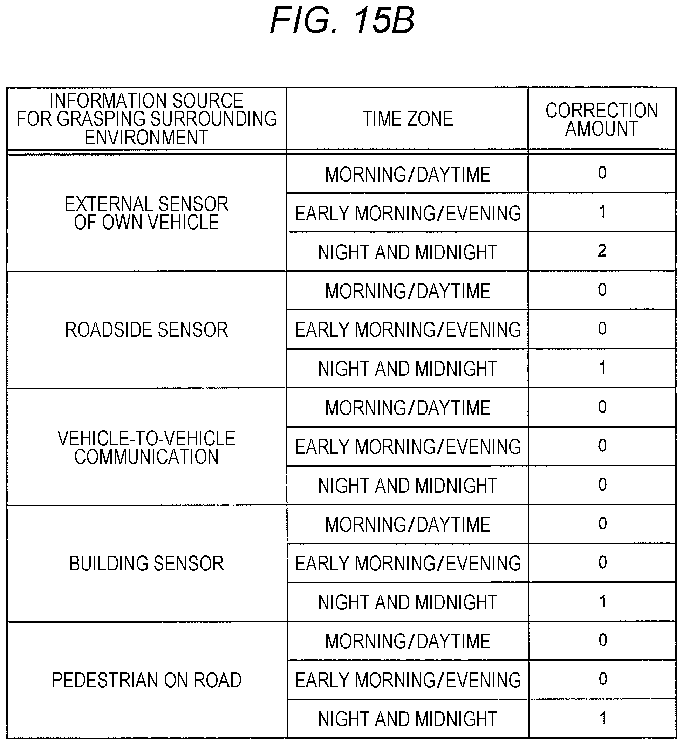

FIG. 14A is a diagram illustrating a setting example of weather and a correction amount in the third embodiment. FIG. 14B is a diagram illustrating a setting example of an information source, weather, and a correction amount for grasping the surrounding environment according to the third embodiment. FIG. 15A is a diagram illustrating a setting example of a time zone and a correction amount in the third embodiment. FIG. 15B is a diagram illustrating a setting example of an information source, a time zone, and a correction amount for grasping the surrounding environment according to the third embodiment.

It is considered that the difficulty level of grasping the surrounding environment and the difficulty level of achieving the function change according to the weather and the time zone. Therefore, as illustrated in FIGS. 14A and 15A, the correction amount is set in advance according to the weather and the time zone to correct the unit price of the automatic driving function (driving behavior).

Furthermore, the correction amounts illustrated in FIGS. 14A and 15A are not necessarily uniformly applied to each item of the information source for grasping the surrounding environment in FIG. 13. For example, when fog occurs, the correction amount varies depending on the information source in FIG. 13. For example, the correction amount when the fog occurs may be +5 (for example, in the case of a camera, when fog occurs, it is difficult to see the front side, and it is difficult to acquire accurate information) for the external sensor of the own vehicle, +2 for the roadside sensor, +1 for vehicle-to-vehicle communication, +3 for a building sensor, +5 for a pedestrian on the road, and the like. Therefore, instead of uniformly applying the correction amount as illustrated in FIG. 14A, as illustrated in FIG. 14B, it is conceivable to set the correction amount according to the difficulty level of information acquisition in consideration of the information source for grasping the surrounding environment and the influence of the weather. Note that the correction amount illustrated in FIG. 14B is an example. Similarly, for example, at night or at midnight, the correction amount differs depending on the information source of FIG. 13. For example, the correction amount at night or at midnight may be +2 (for example, in the case of a camera, since it is difficult to see the front side at night or at midnight, it is difficult to acquire accurate information) for an external sensor of the own vehicle, +1 for a roadside sensor, a building sensor, or a pedestrian on a road, and 0 (since brightness is irrelevant) for vehicle-to-vehicle communication. Therefore, instead of uniformly applying the correction amount as illustrated in FIG. 15A, as illustrated in FIG. 15B, it is conceivable to set the correction amount according to the difficulty level of information acquisition in consideration of the information source for grasping the surrounding environment and the influence of the time zone. Note that the correction amount illustrated in FIG. 15B is an example.

In this case, the cost of the automatic driving function (driving behavior) is calculated by, for example, unit price of the automatic driving function × execution time × (weight + correction amount).

According to the present embodiment, the cost calculation unit 117 can correct the unit price according to the weather information and the time information to acquire the cost, and generate and distribute the driving experience information to the vehicle. As a result, since the vehicle uses the automatic driving function that is easy to execute as much as possible, the number of times of cancellation of the automatic driving (= the number of times of take-over request to the driver) can be reduced. In addition, if the number of times of take-over requests to the driver is reduced, the load on the driver is reduced, and the availability of the system is also improved. At the same time, this also leads to reduction of traffic accidents due to delay in coping with take-over. In addition, the surplus calculation resource can be used in another task by the operation at the minimum cost.

### [Fourth Embodiment]

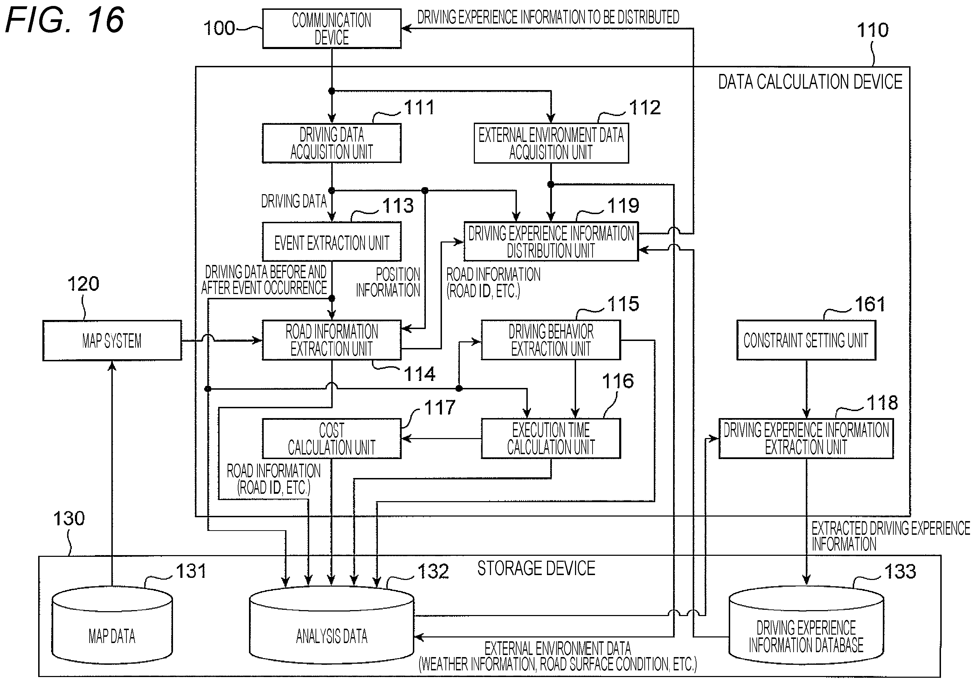

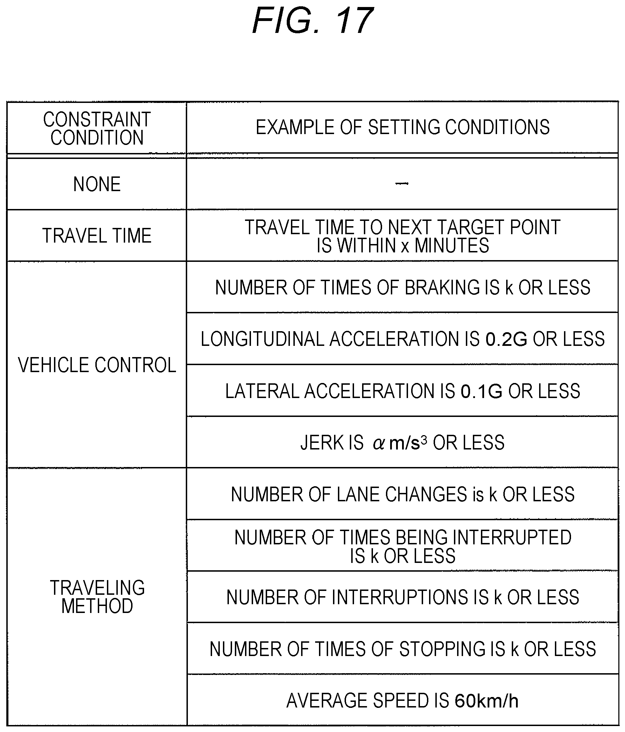

Next, a fourth embodiment of the present invention will be described with reference to FIGS. 16 and 17.

A characteristic feature in the present embodiment is that driving experience information is generated in consideration of constraint conditions.

FIG. 16 is a block diagram for explaining an internal configuration of the data calculation device of the server according to the fourth embodiment.

As compared with the block diagram of the first embodiment illustrated in FIG. 2B, a constraint setting unit 161 is introduced, and a constraint condition is added as input information of the driving experience information extraction unit 118.

FIG. 17 is a diagram for explaining a setting condition example of a constraint condition in the fourth embodiment.

When extracting driving experience information in which a driving behavior extracted from driving data after event extraction is associated with a cost corresponding to the driving behavior, a section (road ID or road section) in a traveling route of the vehicle, and a traveling condition, the driving experience information extraction unit 118 extracts driving experience information satisfying a preset predetermined constraint condition. In other words, the driving experience information extraction unit 118 extracts the driving experience information of the minimum or most frequent cost satisfying the preset predetermined constraint condition on the basis of the plurality of costs acquired from the plurality of pieces of driving data in the section (road ID or road section) and the traveling condition in the traveling route of the vehicle. The extracted driving experience information is stored in a driving experience information database 133 of the storage device 130.

In the driving assistance system of the present embodiment described above, the vehicle Ve transmits driving data to the server 1. Then, the server 1 acquires the cost corresponding to the driving behavior of the driving data on the basis of the driving data sent from the vehicle Ve, and stores the acquired cost as driving experience information together with the driving behavior. At that time, the driving experience information satisfying the preset predetermined constraint condition is stored. Then, the server 1 extracts driving experience information from the driving data sent from the vehicle Ve, and distributes the driving experience information extracted in accordance with the traveling environment and the traveling condition of the vehicle Ve to the vehicle Ve. The vehicle Ve performs trajectory planning (setting of a target trajectory and a target speed) using the driving experience information distributed from the server 1, and performs advanced driving assistance system (ADAS) and automatic driving (AD).

According to the present embodiment, in order to use an automatic driving function that is easily executed by an automatic driving vehicle as much as possible, for example, the server distributes driving experience information that enables traveling at a minimum cost or the like, while satisfying the preset predetermined constraint condition, to the vehicle on the basis of past driving data, and the vehicle plans a traveling trajectory on the basis of the driving experience information and continues automatic driving. As a result, since the vehicle uses the automatic driving function that is easy to execute as much as possible, the number of times of cancellation of the automatic driving (= the number of times of take-over request to the driver) can be reduced. In addition, if the number of times of take-over requests to the driver is reduced, the load on the driver is reduced, and the availability of the system is also improved. At the same time, this also leads to reduction of traffic accidents due to delay in coping with take-over. In addition, the surplus calculation resource can be used in another task by the operation at the minimum cost.

Note that the above embodiment illustrates an example of a case where the cost calculation processing is performed on the server 1 side, but the present invention is not limited to the server 1 side, and the cost calculation processing may be performed on the vehicle Ve side. That is, there are the following cases including a case where the processing on the server 1 side is executed on the vehicle Ve side.
(1) The driving data is transmitted from the vehicle Ve side to the server 1. The cost calculation unit 117 performs the cost calculation processing, and the driving experience information extraction unit 118 extracts the driving experience information on the server 1 side (the above-described the first to fourth embodiments).
(2) The cost calculation unit 117 on the vehicle Ve side performs cost calculation processing and transmits the result to the server 1, and the server 1 side is responsible for extracting driving experience information in the driving experience information extraction unit 118.
(3) The cost calculation unit 117 performs cost calculation processing on the vehicle Ve side, and the driving experience information extraction unit 118 also extracts driving experience information on the vehicle Ve side. The extraction information is transmitted to the server 1.

### [Summary of First to Fourth Embodiments]

As described above, the information processing device according to the present exemplary embodiment includes: the driving data acquisition unit 111 that acquires driving data of a vehicle; the driving behavior extraction unit 115 that extracts a driving behavior from the driving data; the execution time acquisition unit (execution time calculation unit 116) that acquires an execution time required for the driving behavior; the cost acquisition unit (cost calculation unit 117) that acquires a cost of the driving behavior from a unit price corresponding to the driving behavior and the execution time; and the driving experience information storage unit (driving experience information database 133) that stores driving experience information in which the driving behavior is associated with the cost corresponding to the driving behavior, a section, and a traveling condition. The driving experience information storage unit (driving experience information database 133) stores the driving experience information on the basis of a plurality of costs acquired from driving data of a plurality of vehicles in the section and the traveling condition (first embodiment and the like).

In addition, the driving experience information storage unit (the driving experience information database 133) stores driving experience information of a cost that is minimum from the plurality of costs or driving experience information of a most frequent cost (first embodiment and the like).

The cost acquisition unit (cost calculation unit 117) acquires the cost including a weight based on the surrounding environment (second embodiment).

The cost acquisition unit (cost calculation unit 117) acquires the cost by correcting the unit price according to at least one of weather information or time zone information (third embodiment).

The cost acquisition unit (cost calculation unit 117) acquires the cost by correcting the unit price according to at least one of weather information or time zone information and an information source for grasping the surrounding environment (third embodiment).

In addition, the driving experience information storage unit (driving experience information database 133) stores driving experience information satisfying a preset predetermined constraint condition (fourth embodiment).

The driving experience information distribution unit 119 that transmits a plurality of pieces of driving experience information having different traveling conditions in the section to the vehicle and enables the vehicle side to select driving experience information to be executed according to external information of the vehicle from the plurality of pieces of driving experience information (first embodiment and the like).

Furthermore, the driving assistance system of the present embodiment includes the information processing device and a vehicle, and performs driving assistance of the vehicle by executing the driving experience information stored in the driving experience information storage unit (driving experience information database 133) on the vehicle side.

An information processing method according to the present embodiment includes: a driving data acquisition step of acquiring driving data of a vehicle; a driving behavior extraction step of extracting a driving behavior from the driving data; an execution time acquisition step of acquiring an execution time required for the driving behavior; a cost acquisition step of acquiring a cost of the driving behavior from a unit price corresponding to the driving behavior and the execution time; and a driving experience information storage step of storing driving experience information in which the driving behavior is associated with the cost corresponding to the driving behavior, a section, and a traveling condition. In the driving experience information storage step, the driving experience information is stored on the basis of a plurality of costs acquired from driving data of a plurality of vehicles in the section and the traveling condition.

According to the present embodiment, in order to use an automatic driving function that is easily executed by an automatic driving vehicle as much as possible, for example, the server distributes driving experience information that enables traveling at a minimum cost or the like to the vehicle on the basis of past driving data, and the vehicle plans a traveling trajectory on the basis of the driving experience information and continues automatic driving. As a result, since the vehicle uses the automatic driving function that is easy to execute as much as possible, the number of times of cancellation of the automatic driving (= the number of times of take-over request to the driver) can be reduced. In addition, if the number of times of take-over requests to the driver is reduced, the load on the driver is reduced, and the availability of the system is also improved. At the same time, this also leads to reduction of traffic accidents due to delay in coping with take-over. In addition, the surplus calculation resource can be used in another task by the operation at the minimum cost.

Although the embodiments of the present invention have been described in detail above, the present invention is not limited to the above embodiments, and various design changes can be made without departing from the spirit of the present invention described in the claims. For example, the above-described embodiments have been described in detail for easy understanding of the present invention, and are not necessarily limited to those having all the described configurations. Further, a part of the configuration of one embodiment can be replaced with the configuration of another embodiment, and the configuration of another embodiment can be added to the configuration of one embodiment. Furthermore, it is possible to add, delete, and replace other configurations for a part of the configuration of each embodiment.

### Reference Signs List

1 server
100 communication device
110 data calculation device
111 driving data acquisition unit
112 external environment data acquisition unit
113 event extraction unit
114 road information extraction unit
115 driving behavior extraction unit
116 execution time calculation unit (execution time acquisition unit)
117 cost calculation unit (cost acquisition unit)
118 driving experience information extraction unit
119 driving experience information distribution unit
120 map system
130 storage device
131 map data
132 analysis data
133 driving experience information database (driving experience information storage unit)
2 vehicle control device
200 in-vehicle wireless communication device
210 external sensor
220 internal sensor
230 navigation system
240 HMI device
250 cognitive determination device
251 recognition unit
252 driving behavior planning unit
253 trajectory planning unit
254 driving experience information
255 driving experience information search unit
260 vehicle motion control device
270 steering control device
280 accelerator control device
290 brake control device
Ve vehicle

## Claims

1. An information processing device comprising:
a driving data acquisition unit that acquires driving data of a vehicle;
a driving behavior extraction unit that extracts a driving behavior from the driving data;
an execution time acquisition unit that acquires an execution time required for the driving behavior;
a cost acquisition unit that acquires a cost of the driving behavior from a unit price corresponding to the driving behavior and the execution time; and
a driving experience information storage unit that stores driving experience information in which the driving behavior is associated with the cost corresponding to the driving behavior, a section, and a traveling condition,
wherein the driving experience information storage unit stores the driving experience information on a basis of a plurality of costs acquired from driving data of a plurality of vehicles in the section and the traveling condition.

2. The information processing device according to claim 1, wherein the driving experience information storage unit stores driving experience information of a cost that is minimum from the plurality of costs or driving experience information of a most frequent cost.

3. The information processing device according to claim 1, wherein the cost acquisition unit acquires the cost including a weight based on a surrounding environment.

4. The information processing device according to claim 1, wherein the cost acquisition unit corrects the unit price according to at least one of weather information or time zone information to acquire the cost.

5. The information processing device according to claim 1, wherein the cost acquisition unit acquires the cost by correcting the unit price according to at least one of weather information or time zone information and an information source for grasping a surrounding environment.

6. The information processing device according to claim 1, wherein the driving experience information storage unit stores driving experience information satisfying a preset predetermined constraint condition.

7. The information processing device according to claim 1, comprising a driving experience information distribution unit that transmits a plurality of pieces of driving experience information having different traveling conditions in the section to the vehicle, and enables the vehicle side to select driving experience information to be executed according to external information of the vehicle from the plurality of pieces of driving experience information.

8. A driving assistance system comprising:
the information processing device according to claim 1; and
a vehicle,
wherein the vehicle side performs driving assistance of the vehicle by executing the driving experience information stored in the driving experience information storage unit.

9. An information processing method comprising:
acquiring driving data of a vehicle;
extracting a driving behavior from the driving data;
acquiring an execution time required for the driving behavior;
acquiring a cost of the driving behavior from a unit price corresponding to the driving behavior and the execution time; and
storing driving experience information in which the driving behavior is associated with the cost corresponding to the driving behavior, a section, and a traveling condition,
wherein in the storing, the driving experience information is stored on a basis of a plurality of costs acquired from driving data of a plurality of vehicles in the section and the traveling condition.
